# EUROPÄISCHE PATENTSCHRIFT

(11) **EP 1 375 390 B1**
(45) Veröffentlichungstag und Bekanntmachung des Hinweises auf die Patenterteilung: **07.09.2005**
(21) Anmeldenummer: 03013812.7
(22) Anmeldetag: 18.06.2003
(51) Int. Cl.: B65G 17/12, B65G 23/16

(54) **Vorrichtung zur Förderung von Stückgütern**
Device for transporting articles
Dispositif pour le transport des articles

(30) Priorität: 22.06.2002 DE 10227998
(43) Veröffentlichungstag der Anmeldung: 02.01.2004
(73) Patentinhaber: Interroll (Schweiz) AG, 6592 Sant'Antonio (CH)
(72) Erfinder: Axmann, Norbert, D-74889 Sinsheim (DE)
(74) Vertreter: Geitz Truckenmüller Lucht

(56) Entgegenhaltungen:
- EP-A- 0 611 713
- EP-A- 0 662 433
- DE-A- 19 957 841
- FR-A- 2 307 729
- GB-A- 2 140 371

## Beschreibung

Die Erfindung betrifft eine Vorrichtung zur Förderung von Stückgütern, insbesondere eine Vorrichtung zur Förderung- und Sortierung von Stückgütern, bei der Längs einer Förder- bzw. einer Sortierstrecke aufeinanderfolgende Förder- bzw. Sortiereinrichtungen geführt und mittels wenigstens eines an einem entlang der Förder bzw. Sortierstrecke umlaufenden und an den Fördereinrichtungen befestigten Antriebsband angreifenden Antriebsmittel antreibbar ist.

Es sind eine Vielzahl von Fördervorrichtungen mit und ohne Sortiereinrichtungen bekannt geworden. Solche Einrichtungen bilden häufig ein umlaufendes, endloses System. Dabei werden als Endlosfördermittel überwiegend Ketten oder Keilriemen als Zug- und Tragorgane eingesetzt. Derartige Vorrichtungen sind beispielsweise aus der DE 198 01 706 A, der GB 2 140 371 A, der EP 611 713 A und der DE 100 13 332 A bekannt geworden.

Eine Transport- und Sortiervorrichtung der Eingangs genannten Art ist aus der DE 29 05 313 C2 bekannt geworden. Dabei werden aufeinanderfolgende Förderwagen mittels mehrerer Reibräder angetrieben, die an einem entlang der Förderstrecke umlaufenden und an dem Förderwagen befestigten speziellen Antriebsband angreifen.

Diese Konstruktion ist aufwendig und führt zu einem erhöhten Verschleiß in Verbindung mit einem noch immer vergleichsweise hohen Geräuschpegel und hat deshalb in der Praxis keine Anwendung gefunden.

Demgemäß ist es eine Aufgabe der Erfindung, eine Vorrichtung zur Förderung von Stückgütern, insbesondere eine Vorrichtung zur Förderung- und Sortierung von Stückgütern zur Verfügung zu stellen, welche insbesondere bei langen Umlauf-/Fördereinrichtungen bzw. großen Förderstrecken, hohen Förderbelastungen bzw. Zugkräften und/oder erhöhten Temperaturen einen über lange Zeit störungsfreien und geräuscharmen Betrieb sowie günstige Förderverhältnisse ermöglicht.

Diese Aufgabe ist durch die Merkmale des Anspruches 1 gelöst.

Gemäß einem besonders vorteilhaften Ausführungsbeispiel kann vorgesehen sein, dass das antriebsseitige Antriebsband mit Drehkörpern versehen ist, die um senkrecht zur Längserstreckung des abtriebsseitigen Antriebsbandes ausgebildete Drehachsen drehbar sind und die an dem antriebsseitigen Antriebsband in Längsrichtung beabstandet befestigt sind und die bei einem Antrieb des abtriebsseitigen Antriebsbandes mittels des antriebsseitigen Antriebsbandes in Wirkverbindung mit Zähnen des Zahnprofils des abtriebsseitigen Antriebsbandes stehen und an deren Zahnflanken abrollen können. Dadurch können die Betriebsgeräusche und der Verschließ minimiert werden.

Besonders günstige Kraftübertragungsverhältnisse sowie Möglichkeiten zur Übertragung größerer Kräfte können dadurch erreicht werden, dass mehrere Drehkörper des antriebsseitigen Antriebsbandes und mehrere Zähne des abtriebsseitigen Antriebsbandes in einem Kraftübertragungsbereich miteinander in Eingriff stehen, in dem beide Antriebsbänder im wesentlichen parallel zueinander angeordnet sind.

Weiter vorteilhafte Ausgestaltungen ergeben sich aus den abhängigen Ansprüchen.

Gemäß einer besonders vorteilhaften Ausführungsvariante wird die vorstehende Aufgabe insbesondere dadurch gelöst, dass das Antriebsband zwischen Klemmbacken von sich wenigstens im Wesentlichen über die gesamte Länge der jeweiligen Fördereinrichtung und/oder Sortiereinrichtung erstreckenden starren Klemmprofilen festgeklemmt ist und dass die nicht eingeklemmte Länge des Antriebsbandes zwischen aufeinanderfolgenden Fördereinrichtungen sehr viel kleiner ist als die Länge der Klemmprofile.

Durch diese Maßnahmen kann die Dehnung des Antriebsbandes auf ein Minimum reduziert werden, wodurch ein störungsfreier, wartungsarmer und geräuscharmer Betrieb der Fördervorrichtung sowie günstige Förder- und Antriebsverhältnisse auch über lange Zeit sicher gestellt sind. Bei dieser Ausführungsvariante geht es also darum, die zwischen den einzelnen Fördereinrichtungen bzw. Sortiervorrichtungen vorhandenen Bereiche des flexiblen Antriebsbandes, die eine günstige Beweglichkeit dieser Vorrichtungen in horizontaler wie auch in vertikaler Richtung zueinander ermöglichen, so klein wie möglich zu halten, indem das Antriebsband in den übrigen Bereichen durch die starren Klemmprofile festgeklemmt fixiert sind, so daß die Dehnung des Antriebsbandes in diesen Bereichen dem der starren Klemmprofile entspricht. Es hat sich gezeigt, daß die in den verbleibenden kurzen Übergangsbereichen des Antriebsbandes auftretende Dehnung selbst bei großen Förderstrecken in der Praxis vernachlässigbar ist. Auf diese Weise können erstmals auch lange Förderstrecken von beispielsweise 200 bis 300 Meter umfassende Fördervorrichtungen bzw. Förder- und Sortiervorrichtungen, auch quasi beliebig im Raum geführt sowie geräuscharm und wartungsarm betrieben werden.

Ein Vorteil der Erfindung ist es, daß durch die Verwendung eines flexiblen Antriebsbandes zwei wesentliche Funktionen in einem einzigen Element integriert werden können. Eine erste Funktion des Antriebsbandes ist es, die Förder- bzw. Sortiereinrichtungen miteinander zu verbinden, also die Funktion von Gelenken oder Deichseln zu übernehmen. Eine zweite Funktion des Antriebsbandes ist es, als Antriebsmittel zu fungieren.

Es ist ferner von Vorteil, wenn das Antriebsband an der Stoßstelle nicht endlos gemacht werden muß, sondern daß beide Enden an den Klemmprofilen so eingeklemmt werden können, daß sie Stoß auf Stoß aneinander anliegen. Folglich können im festgeklemmten Zustand die zwischen den sich gegenüberliegenden Klemmbacken wirkenden Klemmkräfte nicht nur die Verbindung zwischen den einzelnen Förder- bzw. Sortiereinrichtungen und dem Antriebsband sicherstellen, sondern die Klemmkräfte können auch dazu genutzt werden, eine besonders einfache und kostengünstige Verbindung der Enden des Antriebsbandes zu einem Endlosband zu realisieren. Auf diese Weise ist ein besonders flexibler Einsatz für die unterschiedlichsten Konstruktionen möglich.

Gemäß einer weiteren vorteilhaften Ausgestaltung kann vorgesehen sein, dass die Antriebsbänder jeweils mit einem umlaufenden Zugorgan hoher Festigkeit armiert sind. Hierfür kann jeweils vorzugsweise ein aus Stahllitzen bestehendes Stahlseil verwendet werden. Demgegenüber besteht das das Zugorgan umgebende Antriebsband, wie im Falle ohne eine derartige Armierung, vorzugsweise aus mehreren Gewebelagen, z. B. aus Polyester, mit Zwischen- und Deckschichten. Die voneinander wegweisenden, die Außenoberfläche des Antriebsbandes bildenden Schichten, bestehen vorzugsweise aus Polyurethan. Ein derartiges Antriebsband ist flexibel wie eine Deichsel. Durch die vorstehenden Maßnahmen sind besonders günstige Klemmverhältnisse sowie noch flexiblere Bewegungen in vertikaler Richtung möglich. Die Länge des Antriebsbandes entspricht der Gesamtlänge der Förderstrecke.

Gemäß einer weiteren vorteilhaften Ausgestaltung kann vorgesehen sein, daß die Fördereinrichtungen jeweils als Laufwagen mit an wenigstens einer, im Bereich der Quermitte der jeweiligen Fördereinrichtung bzw. Sortiervorrichtung angeordneten, vorzugsweise zentralen und sich in Förderrichtung erstreckenden Führungsschiene der Förderstrecke geführten Laufrollen gestaltet ist. Dadurch können auch bei schwierigen Kurvenverhältnissen und sogar bei sich überkreuzenden Förderstrecken stets gleichbleibend gute Führungsverhältnisse bei günstigen Konstruktionsmöglichkeiten und kleinen Fertigungstoleranzen erreicht werden. Ferner kann durch die vorgenannten Maßnahmen in einfacher Weise eine auf die Einsatz- und Anwenderbedürfnisse flexibel abgestimmte Schrägstellung bzw. Neigung der Fördereinrichtung, gegebenenfalls zusammen mit der Sortiervorrichtung eingestellt werden, um die beim Durchfahren von Kurvenstrecken auftretenden Zentrifugalkräfte kompensieren zu können.

Dabei ist es vorteilhaft, wenn der Laufwagen mittels wenigstens drei, in einem Winkel von vorzugsweise 120 Grad um die Längsachse der Führungsschiene angeordneten Laufrollen geführt ist. Dies ermöglichst besonders günstige Führungs- und Förderverhältnisse bei einem geräuscharmen und wartungsarmen Betrieb über lange Zeit. Von besonderem Vorteil ist es, wenn die Laufrollen eine die Führungsschiene umgreifende Anordnung ausbilden, so daß sowohl das Gewicht des Laufwagens abgestützt als auch eine Abstützung des Laufwagens entgegen der Schwerkraft erreicht werden kann. Dies ermöglicht eine sichere Führung und Förderung der Laufwagen, auch in einer gegebenenfalls zur Horizontalen geneigten Stellung, um den Anforderungen an schwierige Kurvenverhältnisse, insbesondere bei erhöhten Förderleistungen, genügen zu können.

Hierzu ist es ferner vorteilhaft, wenn die Führungsschiene als ein einen Kreisquerschnitt aufweisendes Führungsrohr gestaltet ist, so daß der an der Führungsschiene geführte Laufwagen zumindest in Teilbereichen im Wesentlichen frei um die Längsachse der Führungsschiene drehbar ist. Auf diese Weise lassen sich beliebige Neigungswinkel des Laufwagens um die Längsachse der Führungsschiene einstellen, zweckmäßiger Weise in Verbindung mit einer weiteren Führungsschiene, die sich in einem Abstand entlang der zentralen Führungsschiene erstreckt und an der wenigstens eine Laufrolle, vorzugsweise wenigstens zwei weitere Laufrollen geführt sind, die um fest mit dem Laufwagen verbundene Drehachsen drehbar sind.

Es versteht sich, daß die vorgenannten Maßnahmen auch im Rahmen der Ausführbarkeit beliebig kombiniert werden können.

Weitere Merkmale, Gesichtspunkte und Vorteile der Erfindung sind dem nachfolgenden Beschreibungsteil entnehmbar, in dem bevorzugte Ausführungsbeispiele der Erfindung anhand der Figuren genauer beschrieben werden.

Es zeigen:
- Fig. 1: In einer ausschnittsweisen Seitenansicht die Führung von über ein Antriebsband aneinander gekoppelten Förder- und Sortiereinrichtungen in unterschiedlichen Ebenen in der Vertikalen;
- Fig. 2: eine Draufsicht auf eine Vorrichtung zum Fördern und Sortieren von Stückgütern mit einem speziellen Kurvenverlauf;
- Fig. 3: einen Querschnitt durch eine Förder- und Sortiervorrichtung im Bereich eines Reibradantriebes;
- Fig. 4: eine Teil-Seitenansicht einer Vorrichtung im Bereich zweier Förder- und Sortiereinrichtungen;
- Fig. 5: eine vergrößerte Teil-Seitenansicht einer Vorrichtung im Bereich zweier sich gegenüberliegenden Enden der Klemmprofile;
- Fig. 6: ein vergrößerter Querschnitt im Bereich der Klemmprofile;
- Fig. 7: eine teilweise schematische, vergrößerte Teil-Draufsicht auf vier, in einer Kurve geführten Förder- und Sortiereinrichtungen;
- Fig. 8: einen Querschnitt durch eine Förder- und Sortiervorrichtung mit in einem bestimmten Neigungswinkel zur Horizontalen geneigten Förder- und Sortiereinrichtung;
- Fig. 9: eine Draufsicht auf einen Antrieb, der eine antriebsseitige Gummikette und eine abtriebsseitige Gummikette für den Antrieb von Fördereinrichtungen aufweist;
- Fig. 10: einen vergrößerten Ausschnitt der Figur 9 im Bereich von in Wirkverbindung stehenden Antriebsteilen;
- Fig. 11: eine Draufsicht auf einen Ausschnitt einer Gummikette, die sowohl für ein antriebsseitiges Antriebsband als auch für ein abtriebsseitiges Antriebsband eingesetzt werden kann;
- Fig. 12: einen Querschnitt durch die Gummikette gemäß Figur 11 entlang der Schnittlinie 14-14;
- Fig. 13: eine Seitenansicht eines Ausschnitts einer antriebsseitigen Gummikette, die mit drehbaren Rollen versehen ist;
- Fig. 14: eine Draufsicht auf den Ausschnitt der Gummikette gemäß Figur 13;
- Fig. 15: eine dreidimensionale Darstellung des Ausschnittes der Gummikette gemäß den Figuren 13 und 14;
- Fig. 16: einen Querschnitt durch die Gummikette gemäß Fig. 13 entlang der Schnittlinie 18-18;
- Fig. 17: einen Querschnitt durch die Gummikette gemäß Fig. 13 entlang der Schnittlinie 19-19;
- Fig. 18: einen vergrößerten Querschnitt im Bereich eines Führungsrohres, entsprechend der Darstellung gemäß Fig. 6, zur Verdeutlichung einer Befestigung des abtriebsseitigen Antriebsbandes an einer der als Laufwagen gestalteten Fördereinrichtungen.

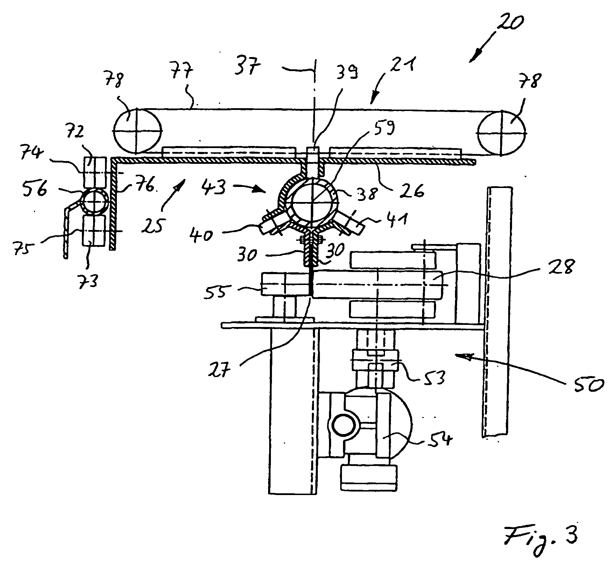

Bei den Figuren 3, 6 und 8 handelt es sich nicht um Ausführungsbeispiele der Erfindung sondern um Beispiele, die das Verständnis der Erfindung erleichtern.

Die Vorrichtung 20 dient zur Förderung von Stückgütern und umfaßt hier auch eine Sortiereinrichtung 21 zum Zielgerichteten Ausschleusen bzw. Sortieren der Stückgüter. Dabei sind längs einer Förderstrecke 22, welche hier auch eine Sortierstrecke bildet, aufeinanderfolgende Fördereinrichtungen 25 in Form von Laufwagen 26 geführt. Die Sortiereinrichtungen 21 sind auf den Laufwagen 26 befestigt und umfassen jeweils ein quer zur Förderstrecke 22 bzw. quer zur Sortierstrecke antreibbares Gurtband 77, das jeweils über Umlenkrollen 78 mit sich in Förderrichtung 24 erstreckenden Drehachsen geführt ist. Der Querantrieb der Gurtbänder der Sortiereinrichtungen 21 erfolgt durch wahlweise zur Zusammenwirkung bringbare Antriebsmittel, die in den Figuren nicht näher dargestellt sind.

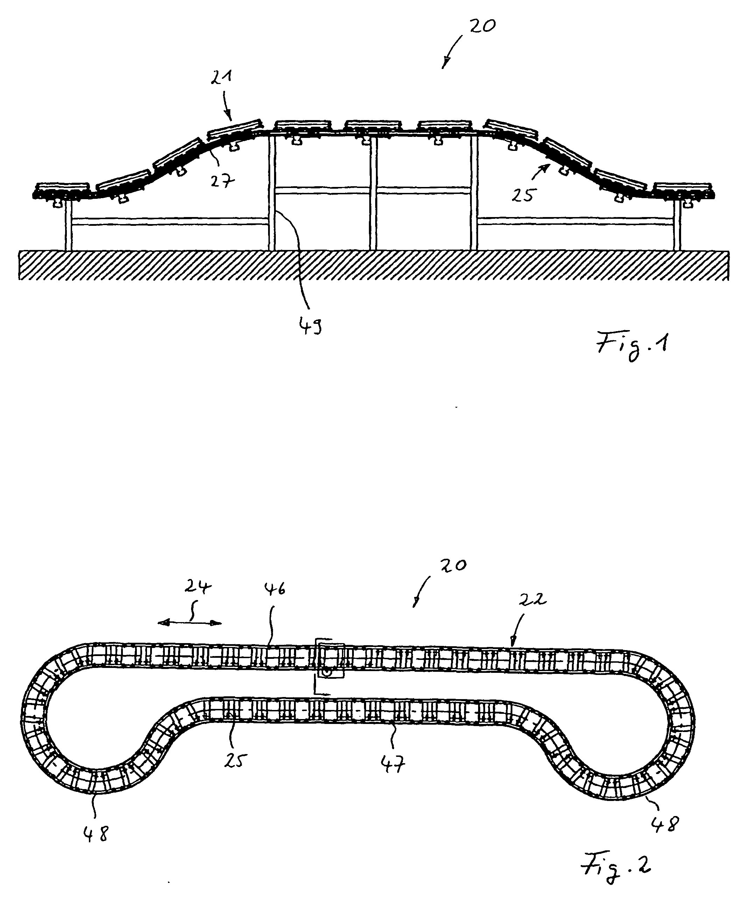

Die Vorrichtung 20 besitzt eine in sich geschlossenen Förderstrecke 22 bzw. Sortierstrecke, wie insbesondere aus Fig. 2 ersichtlich. Die dort gezeigte Förderstrecke 22 bzw. Sortierstrecke weist zwei geradlinige Förder- bzw. Sortierabschnitte 46, 47 und zwar diese miteinander verbindende, bogenförmige Förder- bzw. Sortierabschnitte 48 auf, die hier annähernd als Dreiviertelkreis ausgebildet sind. Wie in Fig. 1 gezeigt, können mit der erfindungsgemäßen Vorrichtung nicht nur horizontale Förder- oder Sortierstrecken realisiert werden, sondern auch vertikal ansteigende bzw. abfallende oder sogar sich überkreuzende Abschnitte, mithin quasi beliebig im dreidimensionalen Raum anordenbare Förder- bzw. Sortierstrecken.

Die Laufwagen 26 der Fördereinrichtungen 25 sind mit plattenförmigen Profilteilen zur Aufnahmen und Befestigung der Sortiereinrichtungen 21 gestaltet und weisen ein seitliches, abgekantetes Profilteil 26 auf. An diesem seitlichen Profilteil 76 ist zumindest ein Rollenpaar aus zwei gegenüberliegenden Laufrollen 72, 73 drehfest über hier parallele Drehachsen 74, 75 verbunden, wobei die beiden Laufrollen 72, 73 eine seitliche Führungsschiene 56 zwischen sich aufnehmen und an dieser geführt sind. Die seitliche Führungsschiene 56 ist als ein einen Kreisquerschnitt aufweisendes Führungsrohr 71 gestaltet.

Die Laufwagen 26 weisen ferner etwa im Bereich ihrer Quermitte bzw. der Quermitte 37 der jeweiligen Fördereinrichtung 25 und in Förderrichtung 24 beabstandet, zwei Anordnungen 43 von hier jeweils drei Laufrollen 39, 40, 41 auf. Diese Laufrollen 39, 40, 41 umgreifen eine zentrale Führungsschiene 38 derart, daß sowohl das Gewicht des Laufwagens 26 abgestützt wird, als auch eine Abstützung des Laufwagens 26 entgegen der Schwerkraft erreicht wird. Zu diesem Zwecke sind hier die Laufrollen 39, 40, 41 bzw. deren jeweilige Drehachsen in einem Winkel 42 von etwa 120 Grad um die Längsachse 59 der zentralen Führungsschiene 38 angeordnet, so daß die hier als Führungsrohr 44 mit einem äußeren Kreisquerschnitt 45 gestaltete Führungsschiene 38 von den Laufrollen 39, 40, 41 formschlüssig umgriffen wird.

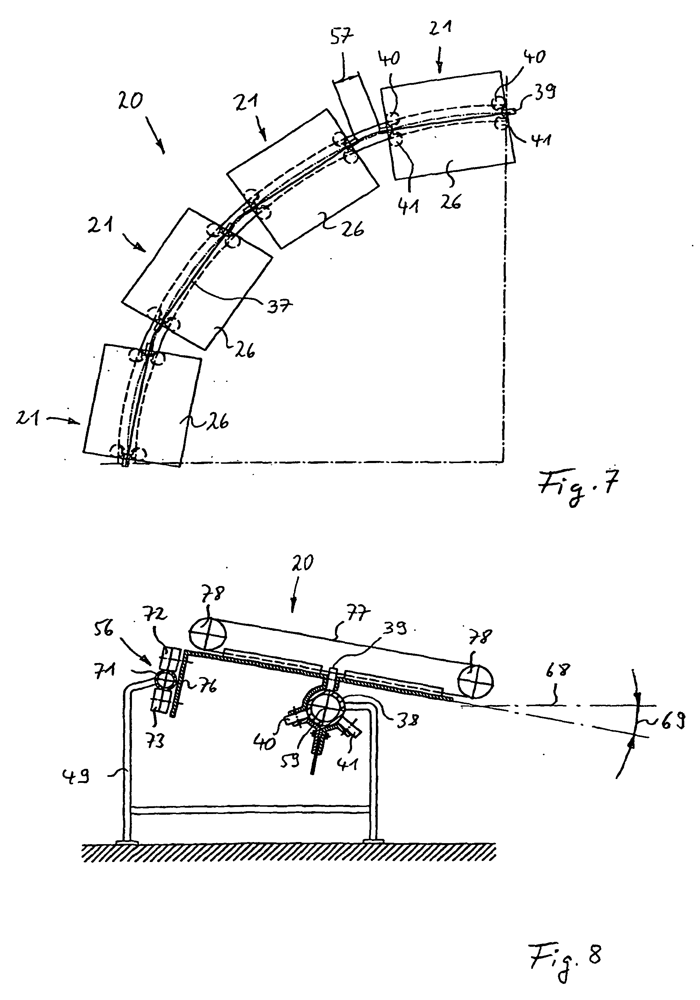

Dabei ist es ein wichtiges Merkmal der Erfindung, daß die Laufwagen 26 an einer im Bereich der Quermitte 37 der jeweiligen Fördereinrichtung 25 bzw. der Laufwagen 26 angeordneten und sich in Förderrichtung 24 erstreckenden, zentralen Führungsschiene 38 über Laufrollen 39, 40, 41 geführt ist. Aufgrund der vorstehenden Maßnahmen können die Fördereinrichtungen 25 mit ihren Sortiereinrichtungen 21 im Wesentlichen frei um die Längsachse 59 der zentralen Führungsschiene 38 gedreht bzw. geneigt werden, wie dies in Fig. 8 anhand des Neigungswinkels 69 veranschaulicht ist. Entsprechend dem jeweils gewünschten Neigungswinkel 69 wird die vertikale Position der seitlichen Führungsschiene 56 relativ zu der zentralen Führungsschiene 38 eingestellt. Dabei sind hier sowohl die seitliche Führungsschiene 56 als auch die zentrale Führungsschiene 38 an einem Standgestell 49 befestigt.

Das hier als flexibler Gurt 29 gestaltete Antriebsband 27 ist zwischen Klemmbacken 31 von sich wenigstens im Wesentlichen über die gesamte Länge 32 der jeweiligen Fördereinrichtung 25 bzw. Sortiereinrichtung 21 erstreckenden starren Klemmprofile 30 festgeklemmt bzw. ist das Antriebsband zwischen Klemmbacken von starren Klemmprofilen festgeklemmt und die nicht eingeklemmte Länge des Antriebsbandes zwischen aufeinanderfolgenden Fördereinrichtungen ist sehr viel kleiner als die Länge der Klemmprofile.

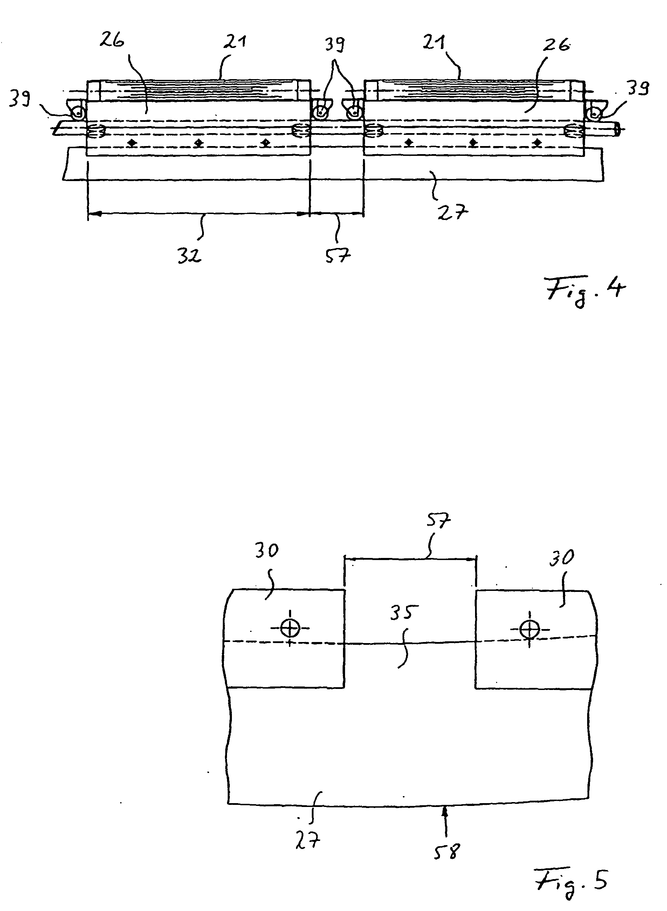

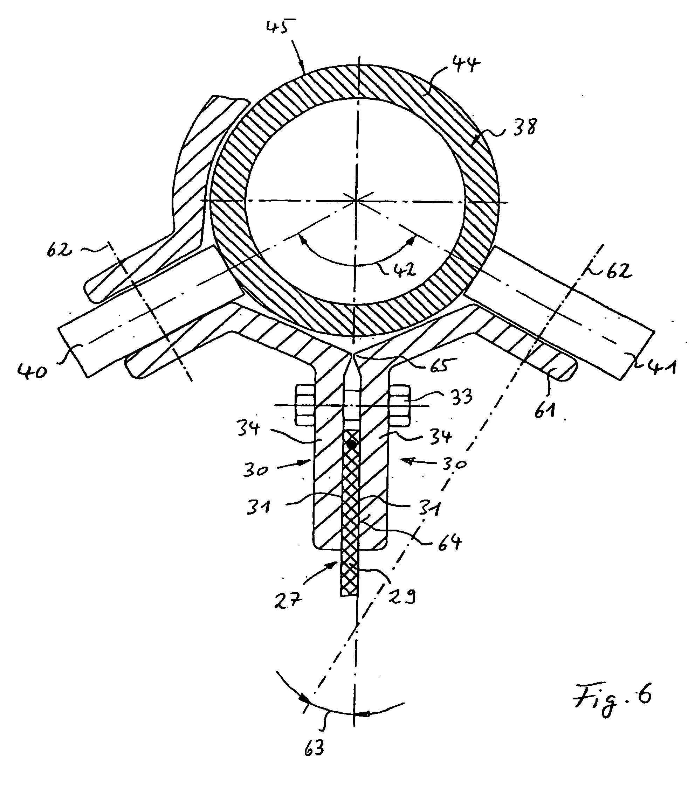

Im Ausführungsbeispiel sind die beiden Klemmprofile 30 als sich parallel zu dem Antriebsband 27 erstreckende, langgestreckte Klemmleisten 34 gestaltet, deren Klemmbacken 31 sich im Wesentlichen über ihre gesamte Länge 32 erstrecken (Fig. 4). Wie insbesondere aus Fig. 6 ersichtlich, sind die Klemmprofile 30 symmetrisch zu dem Antriebsband 27 angeordnet und weisen ein identisches Querschnittsprofil auf. Dies ermöglicht eine kostengünstige Fertigung der beiderseits des Antriebsbandes 27 bzw. des Gurtes 29 festklemmbaren Klemmprofile 30. Jedes Klemmprofil 30 umfaßt einen ersten Profilteil, der die jeweilige Klemmleiste 34 bildet und einen zweiten Profilteil, der als Lagerteil 61 zur Lagerung jeweils einer Drehachse 32 einer der Laufrollen 40, 41 dient. Im Ausführungsbeispiel sind diese beiden Profilteile einstückig miteinander verbunden und bilden ein gemeinsames, langgestrecktes, starres Profilteil.

Die Klemmbacken 31 der Klemmprofile 30 sind hier im Wesentlichen eben über ihre gesamte Länge 32 gestaltet, so daß ein ebenes, großflächiges Anliegen derselben im Bereich eines der Ränder 35 des Antriebsbandes 27 möglich ist. Um eine sichere Klemmung des Antriebsbandes 27 zwischen den beiden Klemmleisten 34 zu ermöglichen, weist jede Klemmleiste 34 eine sich über die Anlagefläche 64 der Klemmbacken 31 erhebende Anstoßnase 65 auf. Deren Höhe über der Anlagefläche 64 ist auf die Dicke 66 des Antriebsbandes 67 derart abgestimmt gestaltet, daß bei einem Klemmen der beiden Klemmleisten 34, hier mit Hilfe der diese durchdringenden Klemmschraube 33, ein möglichst großflächiges Anliegen der sich gegenüberliegenden Klemmbacken 31 der Klemmleisten 34 an den voneinander wegweisenden Seitenflächen des Antriebsbandes gewährleistet ist.

Aufgrund der vorteilhaften Klemmung des Antriebsbandes 27 zwischen den Klemmprofilen 30 im Wesentlichen über die gesamte Länge der Fördereinrichtung 25 bzw. der Sortiereinrichtung 21, kann der freie, d. h. ungeklemmte Bereich des Antriebsbandes 27 zwischen zwei aufeinander folgenden Fördereinrichtungen 24 bzw. Sortiereinrichtungen 21 minimiert werden, mit der Folge, daß die im Betrieb der Vorrichtung 20 gegebenenfalls auftretenden Längenänderungen bzw. Dehnungen des Antriebsbandes 27 auf ein vernachlässigbares Minimum reduziert werden können.

Dadurch, daß der Bereich der freien, ungebundenen Länge 57 des Antriebsbandes 27 erfindungsgemäß möglichst klein gehalten ist, lassen sich auch enge Kurvenradien realisieren, wie beispielsweise in Fig. 7 gezeigt, ohne daß es zu einem sogenannten Polygoneffekt kommt, also zu einer ruckartigen Bewegung bzw. zu Lokal unterschiedlichen Fördergeschwindigkeiten der Laufwagen 26.

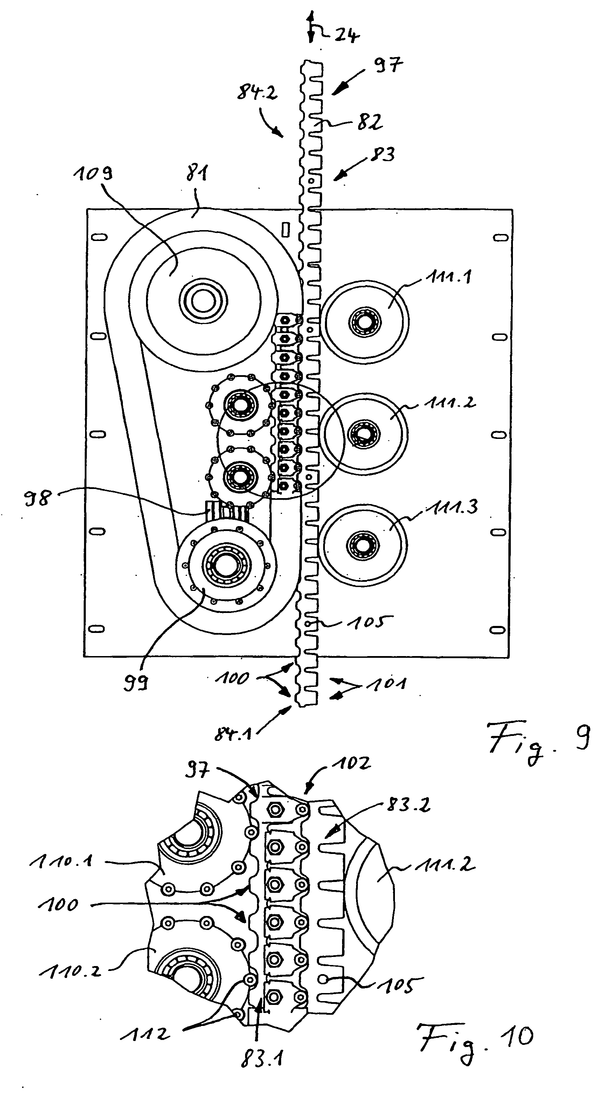

In den Figuren 9 bis 18 ist eine erfindungsgemäße Vorrichtung 20 mit einem Antrieb 80 mit zwei formschlüssig ineinander greifenden Antriebsbändern 81 und 82 dargestellt. Demgemäß betrifft die Erfindung eine Vorrichtung zur Förderung von Stückgütern, die vorzugsweise eine Sortiereinrichtung 21 zum Sortieren der Stückgüter enthält, bei der längs einer Förderstrecke 22 aufeinanderfolgende Fördereinrichtungen 25 geführt und mittels wenigstens eines, an einem entlang der Förderstrecke 22 umlaufenden und an den Fördereinrichtungen 25 befestigten Antriebsband 82 formschlüssig angreifenden Antriebsmittels (antriebsseitiges Antriebsband 81) antreibbar ist. Das antriebsseitige Antriebsband 81 und das abtriebsseitige Antriebsband 82 ist jeweils mit einer Gummikette 83 gestaltet, die ein Zahnprofil 84 aufweist, wobei das Zahnprofil 84.1 des antriebsseitigen Antriebsbandes 81 und das Zahnprofil 84.2 des abtriebsseitigen Antriebsbandes 82 im Wesentlichen gleich gestaltet sind.

Wie aus Figur 9 ersichtlich, umfasst der Antrieb 80 einen Motor 98, der ein drehbares Antriebsrad 99 antreibt. Das Antriebsrad 99 treibt das mit einer Gummikette 83.1 gestaltete antriebsseitige Antriebsband 81 an, welches ein Endlosantriebsmittel darstellt. Dabei ist die antriebsseitige Gummikette 83.1 um ein Umlenkrad 109 umgelenkt. Die antriebsseitige Gummikette 83.1 steht in Wirkverbindung mit einer von dieser angetriebenen abtriebsseitigen Gummikette 83.2, die über geeignete Befestigungsmittel mit den Fördereinrichtungen 25 verbunden ist. Ähnlich wie das Antriebsband 27 ist auch das abtriebsseitige Antriebsband 82 als Endlosfördermittel gestaltet.

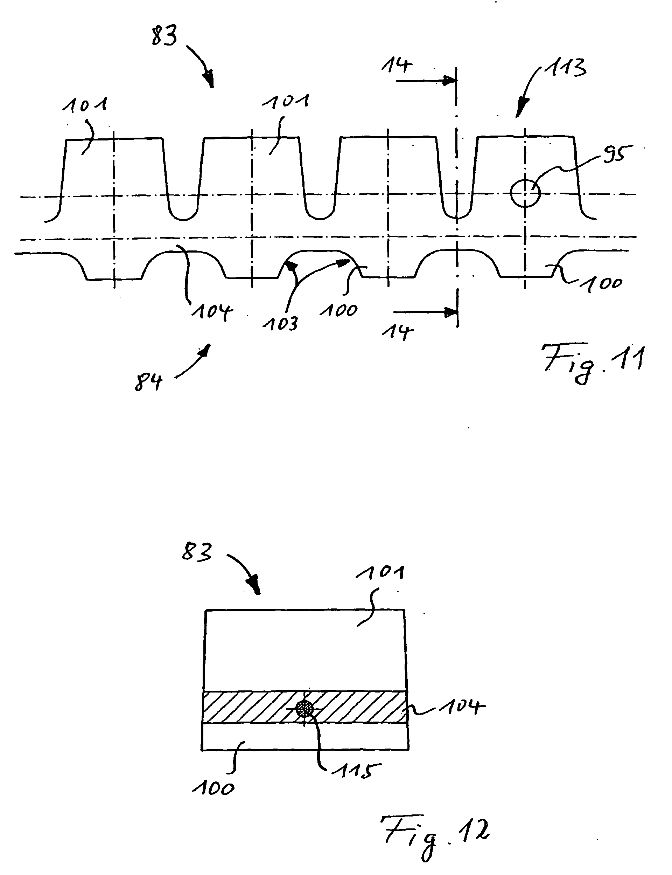

Die antriebsseitige Gummikette 83.1 und die abtriebsseitige Gummikette 83.2 sind hinsichtlich ihrer strukturellen Ausbildung betreffend deren Zahnprofilstruktur gleich gestaltet und sind am Beispiel der in Figur 11 vergrößert dargestellten Gummikette 83 wie folgt beschreibbar.

Die Gummikette 83 umfasst mehrere in Längsrichtung der Gummikette 83 und sich beiderseits nach außen erstreckende Zahnprofile 84, 113. Das Zahnprofil 113 besteht aus mehreren großen Zähnen 101 und das Zahnprofil 84 besteht aus mehreren kleinen Zähnen 100, die sich jeweils ausgehend von dem tragenden Querschnitt 104 der Gummikette 83 voneinander wegweisend quer zur Längsachse der Gummikette nach außen erstrecken. Die Breiten der Zähne 100 und 101 sind jeweils gleich groß, wobei die Zähne 100 und 101 jeweils derart angeordnet sind, dass der jeweilige Zahngrund eines Zahns 100 im Bereich des Zahngrundes eines Zahnes 101 angeordnet ist, so dass sich jeweils in gleichen Abständen voneinander angeordnete dünne Bereiche der Gummikette 83 ausgebildet sind, in denen diese in dem in Figur 11 gezeigten Querschnitt einen minimalen tragenden Querschnitt 104 aufweist. Auf diese Weise ist ebenfalls ein flexibel im Raum verbiegbares Antriebsmittel gestaltet, das eine entsprechende Bewegung der Fördermittel 25 in drei Raumdimensionen ermöglicht.

Im Bereich der großen Zähne 101 sind abgestimmt auf die Abstände der Fördereinrichtungen 25 Bohrungen 95 vorgesehen, welche dazu dienen, die Fördereinrichtungen 25 mithilfe geeigneter Befestigungsmittel an dem abtriebsseitigen Antriebsband befestigen zu können bzw. die dazu dienen, an dem antriebsseitigen Antriebsband 81 die Drehkörper 85 zu befestigen. Beides wird nachstehend noch detaillierter erläutert.

Die kleinen Zähne 100 weisen gerundete Zahnflanken 103 auf, auf denen die Drehkörper 85 des antriebsseitigen Antriebsbandes 81 eine Roll- und/oder Gleitbewegung ausführen können.

Wie aus Figur 12 ersichtlich, kann die Gummikette 83 mit einem Zugorgan 115 armiert sein, das in Ausführung und Gestaltung dem Zugorgan 36 entsprechen kann. Dieses Zugorgan 115 ist in Form eines Stahl-Litzen-Seils in der Quermitte der Gummikette 83 und zugleich etwa in der Mitte des tragenden Querschnitts 104 angeordnet.

Wie aus den Figuren 9 und 10 ersichtlich, entspricht die Gestaltung und Ausbildung der abtriebsseitigen Gummikette der Darstellung in Figur 11, während die antriebsseitige Gummikette 83.1 mit Drehkörpern 85 in Form von Rollen 86 versehen ist, die um senkrecht zur Längserstreckung des abtriebsseitigen Antriebsbandes 82 ausgebildete Drehachsen 92 drehbar sind und die an der antriebsseitigen Gummikette 83.1 in Längsrichtung beabstandet befestigt sind. Diese Drehkörper 85 stehen bei einem Antrieb des abtriebsseitigen Antriebsbandes 82 mithilfe des antriebsseitigen Antriebsbandes 81 in Wirkverbindung mit den kleinen Zähnen 100 des Zahnprofils 84.2 des abtriebsseitigen Antriebsbandes 82.

Wie insbesondere aus den Figuren 9 und 10 ersichtlich, stehen mehrere Drehkörper 85 des antriebsseitigen Antriebsbandes 81 und mehrere Zähne 100 des abtriebsseitigen Antriebsbandes 82 in einem Kraftübertragungsbereich 102 in Eingriff, indem beide Antriebsbänder 82 und 83 im Wesentlichen parallel zueinander angeordnet sind. Dadurch lassen sich größere Kräfte auf das abtriebsseitige Antriebsband 82 übertragen.

Im Bereich des Kraftübertragungsbereiches 102 sind beiderseits der beiden Antriebsbänder 81 und 82 jeweils mehrere Stütz- und Führungsräder 110 und 111 vorgesehen, die an voneinander wegweisenden Seiten 96, 97 der Antriebsbänder 81, 82 mit diesen in Wirkverbindung stehen. Dabei sind antriebsseitig zwei Stütz- und Führungsräder 110.1 und 110.2 vorgesehen. Diese weisen jeweils über ihren Außenumfang beabstandet angeordnete Drehkörper 112 auf, die um senkrecht zur Längserstreckung des abtriebsseitigen Antriebsbandes 82 ausgebildete Drehachsen drehbar sind und die in Wirkverbindung mit den Zähnen 100 des Zahnprofils 84 des abtriebsseitigen Antriebsbandes 82 stehen. Demgemäß sind die Abstände der Drehkörper 112 auf die Abstände der Zähne 100 abgestimmt gestaltet.

Im Unterschied dazu sind an dem abtriebsseitigen Antriebsband 82 drei dort anliegende Stütz- und Führungsräder 111.1, 111.2 und 111.3 angeordnet, die an den nach außen weisenden Stirnflächen der großen Zähne 101 der abtriebsseitigen Gummikette 83.2 reibschlüssig anliegen.

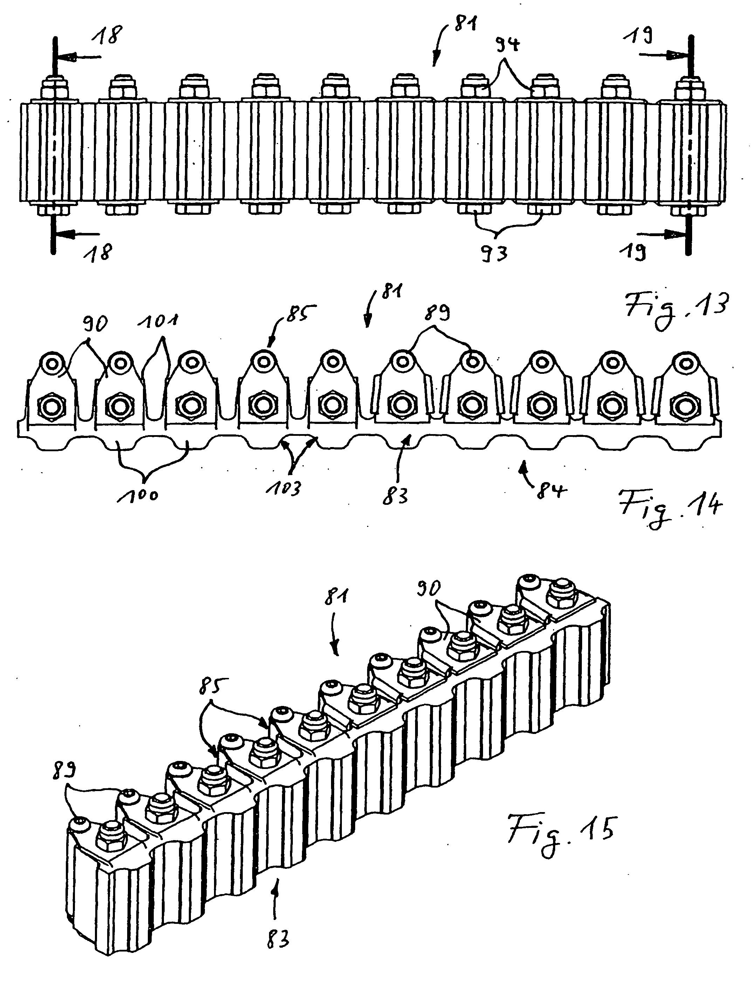

Die genaue Gestaltung des antriebsseitigen Antriebsbandes 81 mit der Gummikette 83.1 ist insbesondere aus den Figuren 13 bis 17 ersichtlich. Im Unterschied zu dem abtriebsseitigen Antriebsband 82 ist die Gummikette 83.1 des antriebsseitigen Antriebsbandes 81 mit jedem großen Zahn 101 zugeordneten rollenartigen Drehkörpern 85 versehen. Jeder Drehkörper 85 umfasst einen im Querschnitt kreiszylindrischen Mitnehmerbolzen 88, über den mit geringem Spiel eine um die Drehachse 92 drehbare Hülse 87 gesteckt ist. Der Mitnehmerbolzen 88 ist ein an beiden Enden über Schrauben 89 jeweils an einer Lasche 90.1 und 90.2 befestigt, die hierfür mit Durchgangslöchern für die Schrauben 89 gestaltet sind. Die Laschen 90.1 und 90.2 sind aus einem gegenüber dem Gummi der Gummikette 83.1 festeren Material, vorzugsweise aus Metall. Die Laschen 90.1 und 90.2 sind im Wesentlichen als flache Platten gestaltet, die auf den voneinander wegweisenden Stirnseiten im Wesentlichen der großen Zähne 101 dort anliegend befestigt sind. Zur Befestigung dient jeweils eine Schraube 93, die durch passende Durchgangsbohrungen der jeweiligen Lasche 90.1 und 90.2 sowie der im Bereich der großen Zähne 101 vorgesehenen Bohrungen 105 hindurch steckbar sind, wobei eine Befestigung der Schrauben 93 mithilfe von Muttern 94 erfolgt.

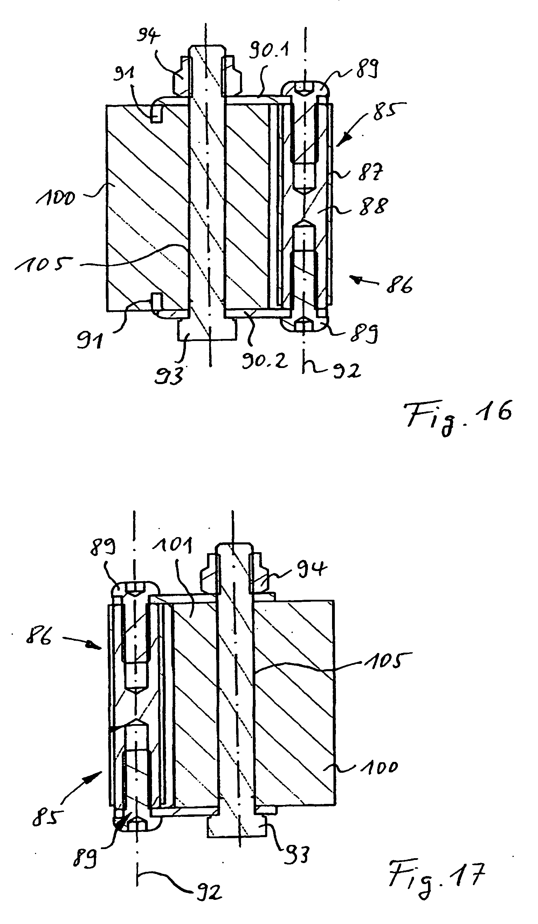

Jede Lasche 90.1 und 90.2 weist an ihrem von dem Drehkörper 85 wegweisenden Ende eine sich quer zur übrigen Laschenebene erstreckende Befestigungsstruktur auf, die im Ausführungsbeispiel mit Zacken 91 gestaltet ist. Dabei sind mehrere nebeneinander liegende Zacken 91 vorgesehen, so dass sich ein sägezahnartiges Befestigungsprofil ergibt. Diese Zacken 91 können bei einem Verspannen der beiden Laschen 90.1 und 90.2 mithilfe der Schraube 93 und der Mutter 94 in das vergleichsweise weiche Gummimaterial der Gummikette 83.1 eingepresst werden, so dass sich eine lagestabile Positionierung der Laschen 90.1 und 90.2 relativ zur Gummikette 83.1 erreichen lässt. Zusätzlich kann eine formschlüssige Abstützung durch sich seitlich beiderseits jeder Lasche erstreckende Randschenkel erreicht werden, die an den jeweiligen vertikalen Außenrändern der großen Zähne 101 anliegen können, wie in den Figuren 14 und 15 jeweils an den fünf rechts außen angeordneten Laschen 90 ersichtlich.

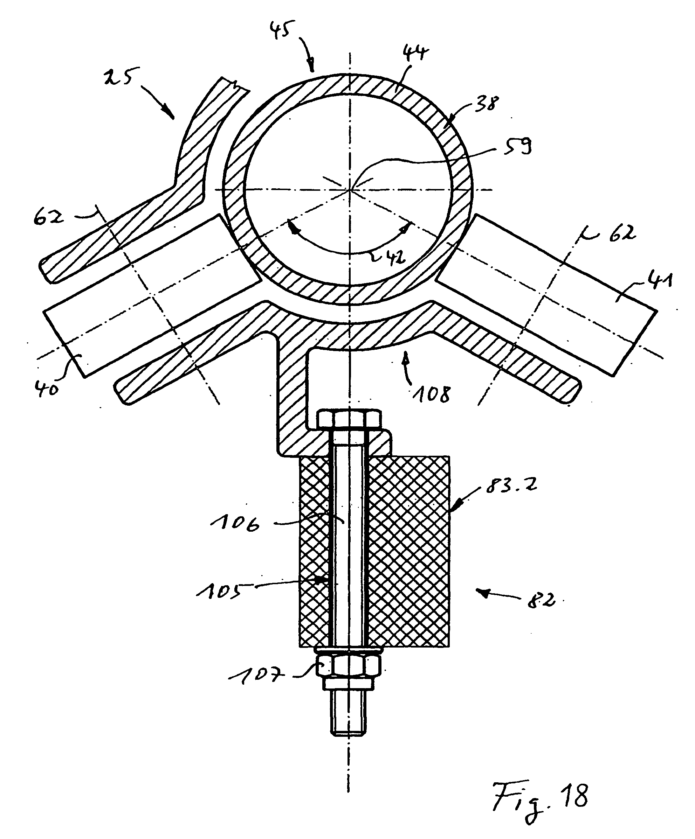

In Figur 18 ist die Befestigung des abtriebsseitigen Antriebsbandes 82, d. h. die Gummikette 83.2 an der jeweiligen Fördereinrichtung 25 veranschaulicht. Dabei sind diejenigen Elemente, die den in den Figuren 1 bis 8, insbesondere den in Figur 6 gezeigten und vorstehend beschriebenen Elementen entsprechen, mit gleichen Bezugszeichen versehen. Es versteht sich, dass die aus den Figuren 1 bis 8 hervorgehenden Gestaltungen und Anordnungen, wie auch vorstehend beschrieben, im Rahmen der Ausführbarkeit mit den aus den Figuren 9 bis 18 hervorgehenden Gestaltungen und Anordnungen beliebig kombinierbar sind.

Zur Befestigung der abtriebsseitigen Gummikette 83.2 kann eine Schraube 106 verwendet werden, die durch ein Durchgangsloch eines Lager- und Befestigungsschenkels 108 hindurchgesteckt ist. Auf die so durchgesteckte Schraube 106 kann die Gummikette 83.2 aufgesteckt werden, wobei dann die Schraube 106 durch die zugehörige Durchgangsbohrung 105 hindurchgesteckt ist. Zur Befestigung und Fixierung kann eine Mutter 107 auf die Schraube 106 aufgeschraubt werden.

## Patentansprüche

1. Vorrichtung zur Förderung von Stückgütern, die vorzugsweise eine Sortiereinrichtung zum Sortieren der Stückgüter enthält, bei der längs einer Förderstrecke aufeinanderfolgende Fördereinrichtungen geführt und mittels wenigstens eines, an einem entlang der Förderstrecke umlaufenden und an den Fördereinrichtungen befestigten Antriebsband formschlüssig angreifenden Antriebsmittel antreibbar ist,
**dadurch gekennzeichnet,**
**dass** ein antriebsseitiges Antriebsband 81 und das abtriebsseitige Antriebsband 82 jeweils mit einer Gummikette 83; 83.1, 83.2 gestaltet sind, die ein Zahnprofil 84.1, 84.2 aufweist, wobei das Zahnprofil 84.1 des antriebsseitigen Antriebsbandes 81 und das Zahnprofil 84.2 des abtriebsseitigen Antriebsbandes 82 im Wesentlichen gleich gestaltet sind.

2. Vorrichtung nach Anspruch 1, **dadurch gekennzeichnet, dass** das antriebsseitige Antriebsband 81 mit Drehkörpern 85 versehen ist, die um senkrecht zur Längserstreckung des abtriebsseitigen Antriebsbandes 82 ausgebildete Drehachsen 92 drehbar sind und die an dem antriebsseitigen Antriebsband 81 in Längsrichtung beabstandet befestigt sind und die bei einem Antrieb des abtriebsseitigen Antriebsbandes 82 mittels des antriebsseitigen Antriebsbandes 81 in Wirkverbindung mit Zähnen 100 des Zahnprofils 84.2 des abtriebsseitigen Antriebsbandes 82 stehen.

3. Vorrichtung nach Anspruch 2, **dadurch gekennzeichnet, dass** mehrere Drehkörper 85 des antriebsseitigen Antriebsbandes 81 und mehrere Zähne 100 des abtriebsseitigen Antriebsbandes 82 in einem Kraftübertragungsbereich 102 miteinander in Eingriff stehen, indem beide Antriebsbänder 81, 82 im Wesentlichen parallel zueinander angeordnet sind.

4. Vorrichtung nach Anspruch 3, **dadurch gekennzeichnet, dass** im Kraftübertragungsbereich 102 beiderseits der beiden Antriebsbänder 81, 82 jeweils wenigstens ein Stütz- und Führungsrad 110, 111 vorgesehen ist, die an voneinander wegweisenden Seiten 96, 96 der Antriebsbänder 81, 82 mit diesen in Wirkverbindung stehen.

5. Vorrichtung nach Anspruch 4, **dadurch gekennzeichnet, dass** das an dem antriebsseitigen Antriebsband 81 angreifende Stütz- und Führungsrad 110 über dessen Außenumfang beabstandet angeordnete Drehkörper 112 aufweist, die um senkrecht zur Längserstreckung des abtriebsseitigen Antriebsbandes 82 ausgebildete Drehachsen drehbar sind und die in Wirkverbindung mit Zähnen 100 des Zahnprofils 84.2 des abtriebsseitigen Antriebsbandes 82 stehen.

6. Vorrichtung nach Anspruch 4 oder 5, **dadurch gekennzeichnet, dass** das an dem abtriebsseitigen Antriebsband 82 anliegende Stütz- und Führungsrad 111 dort reibschlüssig angreift.

7. Vorrichtung nach einem der Ansprüche 1 bis 6, **dadurch gekennzeichnet, dass** das abtriebsseitige Antriebsband 82 zwischen Klemmbacken 31 von sich wenigstens im Wesentlichen über die gesamte Länge 32 der jeweiligen Fördereinrichtung 25 und/oder Sortiereinrichtung 21 erstreckenden starren Klemmprofilen 30 festgeklemmt ist.

8. Vorrichtung nach einem der Ansprüche 1 bis 7, **dadurch gekennzeichnet, dass** das abtriebsseitige Antriebsband 82 zwischen Klemmbacken 31 von starren Klemmprofilen 30 festgeklemmt ist und dass die nicht eingeklemmte Länge 57 des abtriebsseitigen Antriebsbandes 82 zwischen aufeinander folgenden Fördereinrichtungen 25 sehr viel kleiner ist als die Länge 32 der Klemmprofile 30.

9. Vorrichtung nach einem der Ansprüche 1 bis 8, **dadurch gekennzeichnet, dass** die Antriebsbänder 81, 82 jeweils mit einem umlaufenden Zugorgan 115 hoher Festigkeit armiert sind.

## Claims

1. Device for conveying articles, which preferably comprises a sorting device for sorting the articles, in which successive conveying devices are guided along a conveying path and are drivable by means of at least one drive means mechanically positively engaging a drive belt circulating along the conveying path and fastened to the conveying devices, **characterised in that** a drive belt (81) at the drive side and the drive belt (82) at the driven side are each formed by a rubber chain (83; 83.1, 83.2) having a toothed profile (84.1, 84.2), wherein the toothed profile (84.1) of the drive belt (81) at the drive side and the toothed profile (84.2) of the drive belt (82) of the driven side are formed to be substantially identical.

2. Device according to claim 1, **characterised in that** the drive belt (81) at the drive side is provided with rotary bodies (5) which are rotatable about axes (92) of rotation formed perpendicularly to the length direction of the drive belt (82) of the driven side and are fastened to the drive belt (81) at the drive side at a spacing in longitudinal direction and which on driving of the drive belt (82) at the driven side by means of the drive belt (81) of the drive side are disposed in operative connection with teeth (100) of the toothed profile (84.2) of the drive belt (82) at the driven side.

3. Device according to claim 2, **characterised in that** several rotary bodies (85) of the drive belt (81) at the drive side and several teeth (100) of the drive belt (82) at the driven side are disposed in interengagement in a force transmission region (100) **in that** the two drive belts (81, 82) are arranged substantially parallel to one another.

4. Device according to claim 3, **characterised in that** at least one respective supporting and guiding wheel (110, 111), is provided in the force transmission region (102) on either side of the two drive belts (81, 82), the wheels at sides (96, 96) of the drive belts (81, 82) facing away from one another being disposed in operative connection with these.

5. Device according to claim 4, **characterised in that** the supporting and guiding wheel (110) engaging the drive belt (81) at the drive side has rotary bodies (112) which are arranged at a spacing over the outer circumferential surface of the wheel and are rotatable about axes of rotation formed perpendicularly to the longitudinal direction of the drive belt (82) at the driven side and which are disposed in operative connection with teeth (100) of the toothed profile (84.2) of the drive belt (82) at the driven side.

6. Device according to claim 4 or 5, **characterised in that** the supporting and guiding wheel (111) bearing against the drive belt (82) at the driven side engages there by friction couple.

7. Device according to one of claims 1 to 6, **characterised in that** the drive belt (82) at the driven side is fixedly clamped between clamping jaws (31) of rigid clamping profiles (30) extending at least substantially over the entire length (32) of the respective conveying device (25) and/or sorting device (21).

8. Device according to one of claims 1 to 7, **characterised in that** the drive belt (82) at the driven side is firmly clamped between clamping jaws (31) of rigid clamping profiles (30) and that the unclamped length (57) of the drive belt (82) at the driven side between successive conveying devices (25) is very much smaller than the length (32) of the clamping profiles (30).

9. Device according to one of claims 1 to 8, **characterised in that** the drive belts (81, 82) are each reinforced by an encircling tensile element (115) of high strength.

## Revendications

1. Dispositif pour le transport d'articles, qui comprend de préférence une installation de triage pour trier les articles, dans lequel, le long d'un chemin de transport, des installations de transport successives sont guidées, et peut être entraîné par au moins un moyen d'entraînement circulant le long du chemin de transport et s'appliquant par concordance des formes à une bande d'entraînement fixée aux installations de transport,
**caractérisé en ce qu'**une bande d'entraînement côté menant (81) et la bande d'entraînement côté mené (82) sont configurées à chaque fois avec une chaîne de caoutchouc (83; 83.1, 83.2), qui présente un profil denté (84.1, 84.2), où le profil denté (84.1) de la bande d'entraînement côté menant (81) et le profil denté (84.2) de la bande d'entraînement côté mené (82) sont réalisés sensiblement d'une manière identique.

2. Dispositif selon la revendication 1, **caractérisé en ce que** la bande d'entraînement côté menant (81) présente des corps tournants (85) qui peuvent tourner autour d'axes de rotation (92) réalisés perpendiculairement à l'extension longitudinale de la bande d'entraînement côté mené (82) et qui sont fixés à la bande d'entraînement côté menant (81), en étant espacés dans la direction longitudinale, et qui, lors d'un entraînement de la bande d'entraînement côté mené (82), sont en liaison fonctionnelle au moyen de la bande d'entraînement côté menant (81) avec les dents (100) du profil denté (84.2) de la bande d'entraînement côté mené (82).

3. Dispositif selon la revendication 2, **caractérisé en ce que** plusieurs corps tournants (85) de la bande d'entraînement côté menant (81) et plusieurs dents (100) de la bande d'entraînement côté mené (82) sont en prise dans une zone de transmission de forces (102), **en ce que** les deux bandes d'entraînement (81, 82) sont disposées sensiblement parallèlement l'une à l'autre.

4. Dispositif selon la revendication 3, **caractérisé en ce qu'**il est prévu dans la zone de transmission de forces (102) des deux côtés des deux bandes d'entraînement (81, 82) à chaque fois au moins une roue d'appui et de guidage (110, 111) qui, à des côtés (96, 96) détournés l'un de l'autre des bandes d'entraînement (81, 82) sont en liaison fonctionnelle avec celles-ci.

5. Dispositif selon la revendication 4, **caractérisé en ce que** la roue d'appui et de guidage (110) s'appliquant à la bande d'entraînement côté menant (81) présente des corps tournants (112) espacés sur son pourtour extérieur, qui peuvent tourner autour d'axes de rotation réalisés perpendiculairement à l'extension longitudinale de la bande d'entraînement côté mené (82) et qui sont en liaison fonctionnelle avec les dents (100) du profil denté (84.2) de la bande d'entraînement côté mené (82).

6. Dispositif selon la revendication 4 ou 5, **caractérisé en ce que** la roue d'appui et de guidage (111) s'appliquant à la bande d'entraînement (82) côté mené s'y applique par friction.

7. Dispositif selon l'une des revendications 1 à 6, **caractérisé en ce que** la bande d'entraînement côté mené (82) est serrée entre des mâchoires de serrage (31) de profilés de serrage rigides (30) s'étendant au moins sensiblement sur toute la longueur (32) de l'installation de transport (25) et/ou installation de triage (21) respective.

8. Dispositif selon l'une des revendications 1 à 7, **caractérisé en ce que** la bande d'entraînement côté mené (82) est serrée entre des mâchoires de serrage (31) de profilés de serrage rigides (30) et **en ce que** la longueur non serrée (57) de la bande d'entraînement côté mené (82) entre des installations de transport successives (25) est beaucoup plus petite que la longueur (32) des profilés de serrage (30).

9. Dispositif selon l'une des revendications 1 à 8, **caractérisé en ce que** les bandes d'entraînement (81, 82) sont armées à chaque fois d'un organe de traction tournant (115) d'une solidité élevée.
